# EUROPEAN PATENT APPLICATION

(11) **EP 4 800 798 A1**
(43) Date of publication of application: **02.09.2026**
(21) Application number: 23956524.5
(22) Date of filing: 27.10.2023
(51) Int. Cl.: H01M 10/0567, H01M 10/0569, H01M 10/0566

(54) **SECONDARY BATTERY AND ELECTRONIC DEVICE**

(71) Applicant: Ningde Amperex Technology Limited, Ningde, Fujian 352100 (CN)
(72) Inventor: XU, Qing, Ningde, Fujian 352100 (CN)
(74) Representative: Kraus & Lederer PartGmbB
(86) International application number: PCT/CN2023/127308
(87) International publication number: WO 2025/086283

(57) **Abstract**

A secondary battery and an electronic apparatus are provided. The secondary battery includes a positive electrode plate, a negative electrode plate, and an electrolyte, the electrolyte includes propionate and a first additive, and the first additive includes at least one of a compound represented by formula (Ia), a compound represented by formula (Ib), or a compound represented by formula (Ic). Controlling the electrolyte to include the propionate and the first additive and the type of the first additive to fall within the range of this application can improve the low-temperature performance of the secondary battery and reduce the impedance of the secondary battery.

## Description

### TECHNICAL FIELD

This application relates to the field of electrochemical technologies, and in particular, to a secondary battery and an electronic apparatus.

### BACKGROUND

Lithium-ion batteries have many advantages, such as high specific energy density, long cycle life, high nominal voltage, low self-discharge rate, small size, and light weight, and therefore are widely used in portable electronic devices, electric bicycles, electric vehicles, energy storage devices, and other fields. Persons skilled in the art are continuously improving the usage performance of lithium-ion batteries, and lithium-ion batteries will occupy an important position in the consumer electronics field for a long time.

During use of lithium-ion batteries, temperature is an important factor affecting their discharge performance. At low temperature (for example, temperature below -10°C), the discharge voltage and discharge SOC (State of Charge, state of charge) of lithium-ion batteries decrease, the discharge capacity of lithium-ion batteries decreases, and the impedance of lithium-ion batteries increases.

### SUMMARY

This application is intended to provide a secondary battery and an electronic apparatus to improve the low-temperature performance of the secondary battery and reduce the impedance of the secondary battery. Specific technical solutions are as follows.

A first aspect of this application provides a secondary battery, including a positive electrode plate, a negative electrode plate, and an electrolyte, where the electrolyte includes propionate and a first additive, and the first additive includes at least one of a compound represented by formula (Ia), a compound represented by formula (Ib), or a compound represented by formula (Ic), 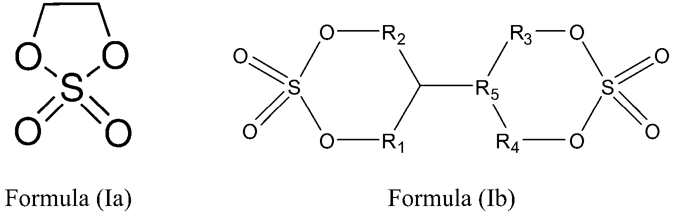 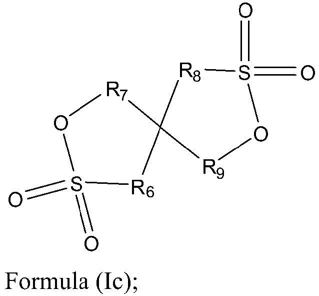 where R₁, R₂, R₃, and R₄ are each independently selected from single bond and methylene substituted by Ra or unsubstituted, Ra in each group being each independently selected from F, Cl, Br, I, methyl, ethyl, propyl, isopropyl, butyl, tert-butyl, trifluoromethyl, and tetrafluoroethyl, and not all of R₁, R₂, R₃, and R₄ being single bonds; R₅ is selected from single bond, -O-, C1 to C3 alkylene, C1 to C3 haloalkylene, or C1 to C3 oxyalkylene; and R₆, R₇, R₈, and R₉ are each independently selected from C1 to C5 alkylene substituted by Rb or unsubstituted and O, Rb in each group being each independently selected from F, Cl, Br, I, methyl, ethyl, propyl, isopropyl, butyl, tert-butyl, trifluoromethyl, and tetrafluoroethyl. Controlling the electrolyte to include the propionate and the first additive and the type of the first additive to fall within the range of this application can improve the low-temperature performance of the secondary battery and reduce the impedance of the secondary battery.

In an embodiment of this application, the electrolyte satisfies at least one of the following:
(1) the propionate includes at least one of ethyl propionate or propyl propionate;
(2) the compound represented by formula (Ib) includes at least one of the following compounds: 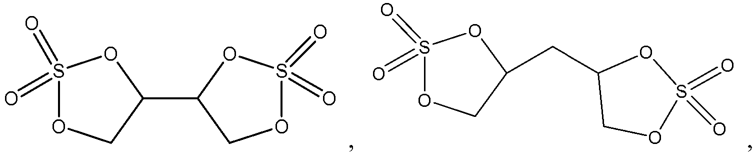 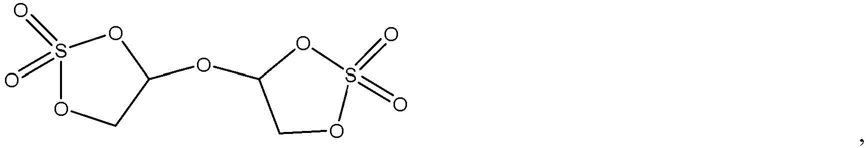 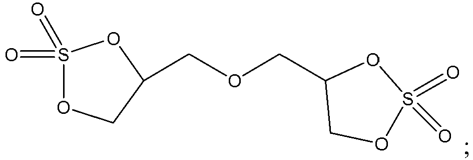
(3) the compound represented by formula (Ic) includes at least one of the following compounds: 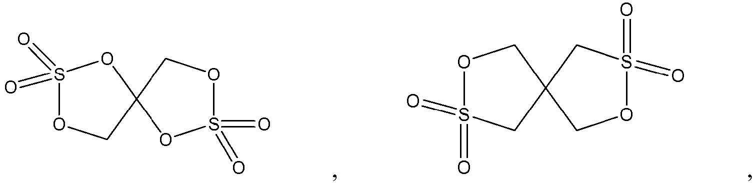 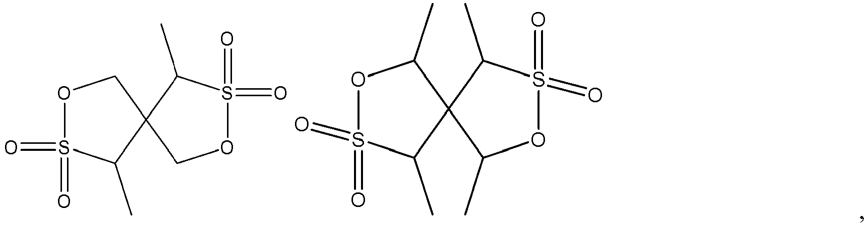 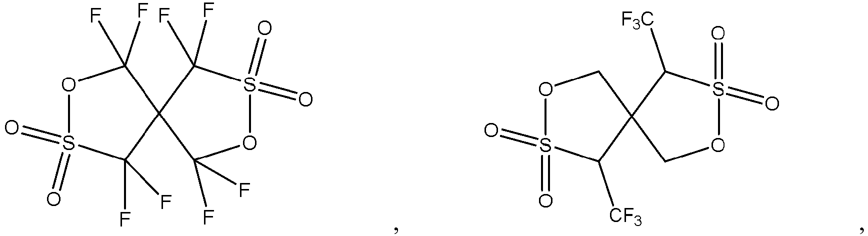 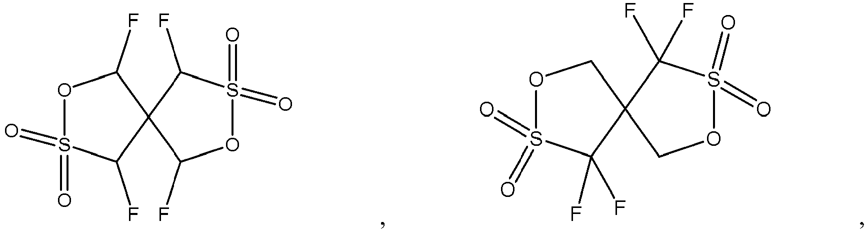 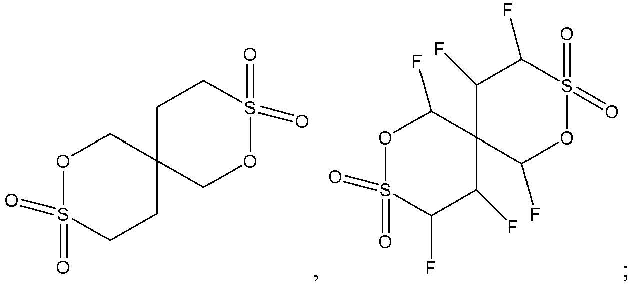
(4) a mass percentage of the propionate is A based on a mass of the electrolyte, where 0.01%≤A≤70%; and
(5) a mass percentage of the first additive is C based on the mass of the electrolyte, where 0.01%≤C≤4%.

Satisfying at least one of the foregoing conditions can further improve the low-temperature performance of the secondary battery and reduce the impedance of the secondary battery.

**In** an embodiment of this application, the electrolyte further includes a second additive, and the second additive includes at least one of lithium difluorophosphate, lithium fluorosulfonate, or bis(fluorosulfonyl)imide. The electrolyte is controlled to further include the second additive and the type of the second additive is controlled to fall within the range of this application, so that the second additive, the propionate, and the first additive can synergistically control thickness of protective films on positive and negative electrode interfaces, further improving the low-temperature performance of the secondary battery and reducing the impedance of the secondary battery.

In an embodiment of this application, a mass percentage of the second additive is D based on a mass of the electrolyte, where 0.01%≤D≤6%. Controlling the mass percentage D of the second additive to fall within the range of this application can obtain more effective protective films on positive and negative electrode interfaces, further improving the low-temperature performance of the secondary battery and reducing the impedance of the secondary battery.

In an embodiment of this application, the positive electrode plate includes a positive electrode current collector and a positive electrode material layer disposed on at least one surface of the positive electrode current collector, the positive electrode material layer includes a positive electrode active material, and a chemical formula of the positive electrode active material is LiCo₁₋ₐMₐO₂, where M includes at least one of Mg, Al, Ti, Zr, Ce, La, Y, W, Ba, or Ca, and 0≤a≤0.2. At low temperature, the viscosity of the electrolyte is high, and the migration rate of lithium ions is slow, limiting the improvement in the low-temperature performance of the secondary battery. At high temperature, the migration path of lithium ions is disrupted, leading to an increase in the impedance of the secondary battery. Using the foregoing positive electrode active material can effectively increase the migration rate of lithium ions, improving the low-temperature performance of the secondary battery; and causes small disruption to the migration path of lithium ions at high temperature, which can reduce the cycling impedance increase rate of the secondary battery, reducing the impedance of the secondary battery.

In an embodiment of this application, M includes Y, and a mass percentage of Y is B based on a mass of the positive electrode active material, where 400 ppm≤B≤5000 ppm. The doping element M can improve the crystal structure stability of the positive electrode active material. M includes Y, and controlling the mass percentage B of Y to fall within the range of this application can further improve the crystal structure stability of the positive electrode active material and increase the degree of interaction between different components in the electrolyte at low temperature, which optimizes the toughness of the protective film on the positive electrode interface, further improving the low-temperature performance of the secondary battery and reducing the impedance of the secondary battery.

In an embodiment of this application, M includes Y, a mass percentage of Y is B based on a mass of the positive electrode active material, and a mass percentage of the propionate is A based on a mass of the electrolyte, where 0.1%≤A≤70%, and 0.2≤A/B≤800. Controlling the mass percentage A of the propionate and the value of A/B to fall within the ranges of this application can match the mass percentage of the propionate with that of Y in the positive electrode active material, so that the propionate can synergize with the positive electrode active material, which can promote the migration of lithium ions and prevent side reactions, further improving the low-temperature performance of the secondary battery and reducing the impedance of the secondary battery.

In an embodiment of this application, M includes at least one of La, Mg, or W, and a mass percentage of La, Mg, or W is independently 200 ppm to 10000 ppm based on a mass of the positive electrode active material. Controlling M to include at least one of La, Mg, or W and the mass percentage of the doping element La, Mg, or W to independently fall within the range of this application can increase the surface resistance of the positive electrode plate to some extent, so that lithium ions have an appropriate deintercalation rate, improving the structural stability and cycling performance of the secondary battery.

In an embodiment of this application, M includes at least one of Ba or Ca, and a mass percentage of Ba or Ca is independently 100 ppm to 22000 ppm based on a mass of the positive electrode active material. Controlling M to include at least one of Ba or Ca and the mass percentage of the doping element Ba or Ca to independently fall within the range of this application can improve the high-temperature stability of the positive electrode active material, and make the secondary battery have good high-temperature performance while improving the low-temperature performance of the secondary battery and reducing the impedance of the secondary battery.

A second aspect of this application provides an electronic apparatus, including the secondary battery according to any one of the foregoing embodiments. Therefore, the electronic apparatus provided in this application has good usage performance.

This application has the following beneficial effects.

This application provides a secondary battery and an electronic apparatus, the secondary battery includes a positive electrode plate, a negative electrode plate, and an electrolyte, the electrolyte includes propionate and a first additive, and the first additive includes at least one of a compound represented by formula (Ia), a compound represented by formula (Ib), or a compound represented by formula (Ic). Controlling the electrolyte to include the propionate and the first additive and the type of the first additive to fall within the range of this application can improve the low-temperature performance of the secondary battery and reduce the impedance of the secondary battery.

Certainly, when any one of the products or methods of this application is implemented, the advantages described above are not necessarily demonstrated all at the same time.

### DESCRIPTION OF EMBODIMENTS

The following clearly and completely describes the technical solutions in the embodiments of this application. Apparently, the described embodiments are only some but not all of the embodiments of this application. All other embodiments obtained by persons skilled in the art based on this application shall fall within the protection scope of this application.

It should be noted that in the following content, an example in which a lithium-ion battery is used as a secondary battery is used to illustrate this application. However, the secondary battery of this application is not limited to the lithium-ion battery. Specific technical solutions are as follows.

This application provides a secondary battery, including a positive electrode plate, a negative electrode plate, and an electrolyte, where the electrolyte includes propionate and a first additive, and the first additive includes at least one of a compound represented by formula (Ia), a compound represented by formula (Ib), or a compound represented by formula (Ic), 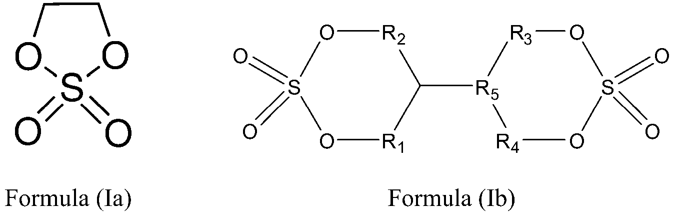 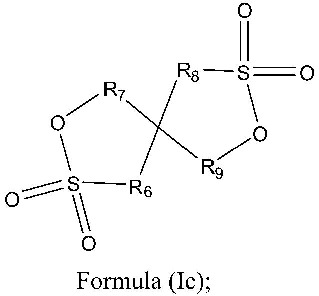 where R₁, R₂, R₃, and R₄ are each independently selected from single bond and methylene substituted by Ra or unsubstituted, Ra in each group being each independently selected from F, Cl, Br, I, methyl, ethyl, propyl, isopropyl, butyl, tert-butyl, trifluoromethyl, and tetrafluoroethyl, and not all of R₁, R₂, R₃, and R₄ being single bonds; R₅ is selected from single bond, -O-, C1 to C3 alkylene, C1 to C3 haloalkylene, or C1 to C3 oxyalkylene; and R₆, R₇, R₈, and R₉ are each independently selected from C1 to C5 alkylene substituted by Rb or unsubstituted and O, Rb in each group being each independently selected from F, Cl, Br, I, methyl, ethyl, propyl, isopropyl, butyl, tert-butyl, trifluoromethyl, and tetrafluoroethyl. In this application, the C1 to C3 haloalkylene may be -CCl-, -CH₂CCl-, or -CH₂CH₂CCl-. The C1 to C3 oxyalkylene may be -OCH-, -CH₂OCH-, or -CH₂OCH₂CH-. The C1 to C5 alkylene may be methylene, ethylene, propylene, butylene, or pentylene.

The inventor has found through research that due to different chemical structures of the propionate and the first additive, they can synergistically improve the low-temperature performance of the secondary battery and reduce the impedance of the secondary battery during cycling of the secondary battery. The propionate and the first additive can be mixed to prepare secondary batteries with improved capacity characteristics at low temperature. Controlling the electrolyte to include the propionate and the first additive and the type of the first additive to fall within the range of this application can improve the low-temperature performance of the secondary battery and reduce the impedance of the secondary battery.

In an embodiment of this application, the propionate includes at least one of ethyl propionate or propyl propionate. Controlling the type of the propionate to fall within the range of this application can further improve the low-temperature performance of the secondary battery and reduce the impedance of the secondary battery.

In an embodiment of this application, a mass percentage of the propionate is A based on a mass of the electrolyte, where 0.01%≤A≤70%. For example, A may be 0.01%, 0.05%, 0.1%, 0.5%, 1%, 1.3%, 1.7%, 2%, 2.3%, 2.7%, 3%, 3.3%, 3.7%, 4%, 4.3%, 4.7%, 5%, 5.3%, 5.7%, 6%, 6.3%, 6.7%, 7%, 7.3%, 7.7%, 8%, 8.3%, 8.7%, 9%, 9.3%, 9.7%, 10%, 15%, 20%, 25%, 30%, 35%, 40%, 45%, 50%, 55%, 60%, 65%, 70%, or within a range defined by any two of these values. Controlling the mass percentage A of the propionate to fall within the range of this application can make the propionate have an appropriate mass percentage, so that the propionate and the first additive can be mixed to further improve the low-temperature performance of the secondary battery and reduce the impedance of the secondary battery.

In an embodiment of this application, the compound represented by formula (Ib) includes at least one of the following compounds:

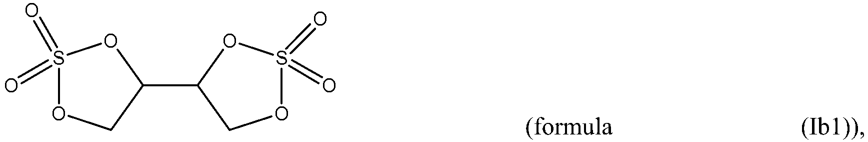

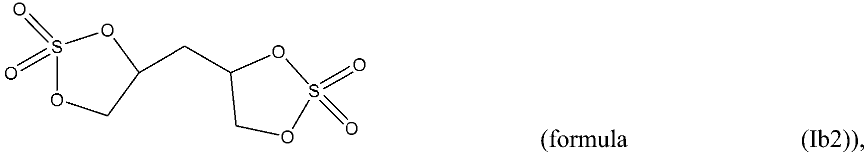

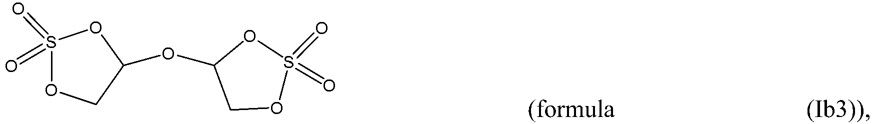

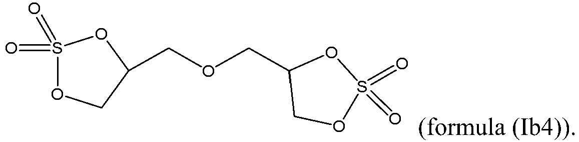

Using the foregoing compound represented by formula (Ib) can further improve the low-temperature performance of the secondary battery and reduce the impedance of the secondary battery.

In an embodiment of this application, the compound represented by formula (Ic) includes at least one of the following compounds:

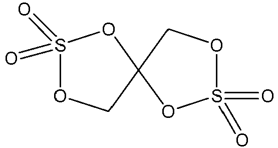

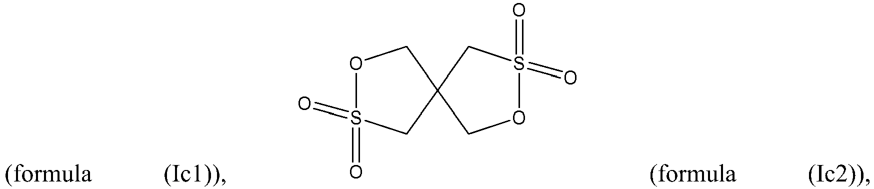

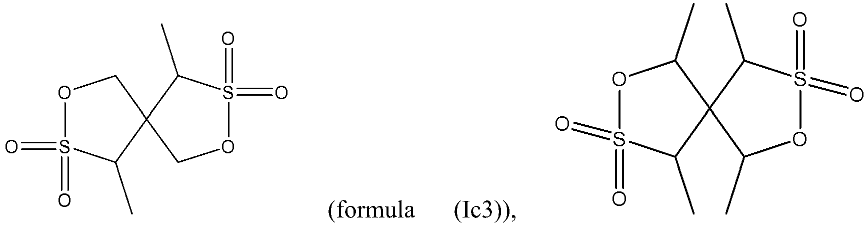

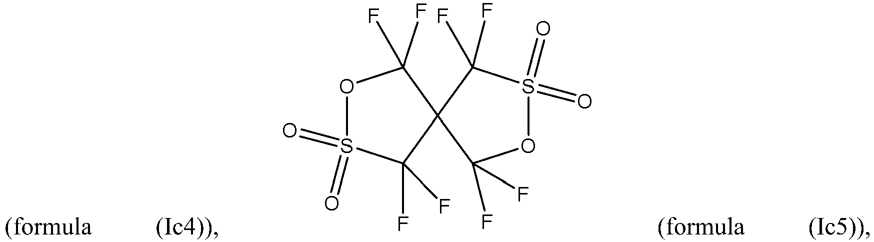

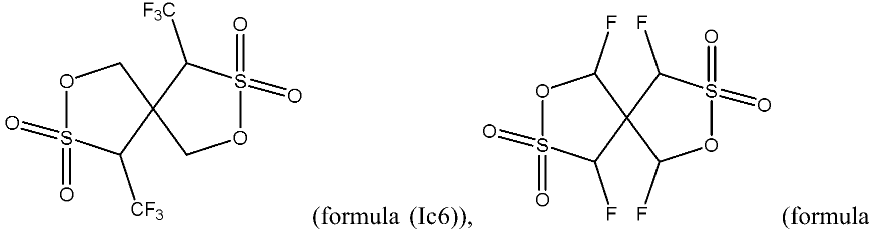

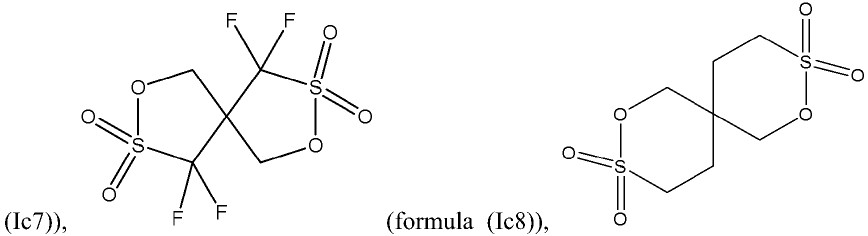

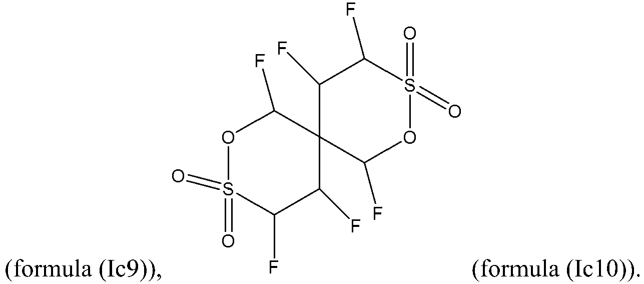

Using the foregoing compound represented by formula (Ic) can further improve the low-temperature performance of the secondary battery and reduce the impedance of the secondary battery.

In an embodiment of this application, a mass percentage of the first additive is C based on the mass of the electrolyte, where 0.01%≤C≤4%. For example, C may be 0.01%, 0.03%, 0.05%, 0.07%, 0.1%, 0.3%, 0.4%, 0.5%, 0.7%, 0.9%, 1%, 1.2%, 1.3%, 1.5%, 1.7%, 1.9%, 2%, 2.2%, 2.3%, 2.4%, 2.5%, 2.7%, 2.9%, 3%, 3.3%, 3.4%, 3.5%, 3.7%, 4%, or within a range defined by any two of these values. Controlling the mass percentage C of the first additive to fall within the range of this application can make the first additive have an appropriate mass percentage, so that the first additive and the propionate can be mixed to further improve the low-temperature performance of the secondary battery and reduce the impedance of the secondary battery. In this application, when the first additive includes the compound represented by formula (Ia), the mass percentage of the compound represented by formula (Ia) may be 0.01% to 4%; when the first additive includes the compound represented by formula (Ib), the mass percentage of the compound represented by formula (Ib) may be 0.01% to 4%; and when the first additive includes the compound represented by formula (Ic), the mass percentage of the compound represented by formula (Ic) may be 0.01% to 4%. When the first additive includes two or more compounds, the mass percentage of each compound is not particularly limited in this application, provided that the mass percentage of the first additive falls within the range of this application.

In an embodiment of this application, the electrolyte further includes a second additive, and the second additive includes at least one of lithium difluorophosphate, lithium fluorosulfonate, or bis(fluorosulfonyl)imide. The electrolyte is controlled to further include the second additive and the type of the second additive is controlled to fall within the range of this application, so that the second additive, the propionate, and the first additive can synergistically control thickness of protective films on positive and negative electrode interfaces, further improving the low-temperature performance of the secondary battery and reducing the impedance of the secondary battery.

In an embodiment of this application, a mass percentage of the second additive is D based on a mass of the electrolyte, where 0.01%≤D≤6%. For example, D may be 0.01%, 0.05%, 0.1%, 0.5%, 1%, 1.5%, 1.7%, 2%, 2.3%, 2.5%, 3%, 3.5%, 4%, 4.2%, 4.5%, 5%, 5.5%, 6%, or within a range defined by any two of these values. Controlling the mass percentage D of the second additive to fall within the range of this application can obtain more effective protective films on positive and negative electrode interfaces, further improving the low-temperature performance of the secondary battery and reducing the impedance of the secondary battery.

In an embodiment of this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction, or on two surfaces of the positive electrode current collector in its thickness direction. It should be noted that the "surface" herein may be an entire region or a partial region of the positive electrode current collector. This is not particularly limited in this application, provided that the objectives of this application can be achieved. The positive electrode material layer includes a positive electrode active material, and a chemical formula of the positive electrode active material is LiCo₁₋ₐMₐO₂, where M includes at least one of Mg, Al, Ti, Zr, Ce, La, Y, W, Ba, or Ca, and 0≤a≤0.2. For example, a may be 0, 0.02, 0.04, 0.06, 0.08, 0.1, 0.12, 0.14, 0.16, 0.18, 0.2, or within a range defined by any two of these values. At low temperature, the viscosity of the electrolyte is high, and the migration rate of lithium ions is slow, limiting the improvement in the low-temperature performance of the secondary battery. At high temperature, the migration path of lithium ions is disrupted, leading to an increase in the impedance of the secondary battery. Using the foregoing positive electrode active material can effectively increase the migration rate of lithium ions, improving the low-temperature performance of the secondary battery; and causes small disruption to the migration path of lithium ions at high temperature, which can reduce the cycling impedance increase rate of the secondary battery, reducing the impedance of the secondary battery. In this application, high temperature refers to a temperature higher than 40°C.

In an embodiment of this application, M includes Y, and a mass percentage of Y is B based on a mass of the positive electrode active material, where 400 ppm≤B≤5000 ppm. For example, B may be 400 ppm, 500 ppm, 750 ppm, 1000 ppm, 1200 ppm, 1500 ppm, 2000 ppm, 2200 ppm, 2500 ppm, 3000 ppm, 3200 ppm, 3500 ppm, 4000 ppm, 4200 ppm, 4500 ppm, 5000 ppm, or within a range defined by any two of these values. The doping element M can improve the crystal structure stability of the positive electrode active material. M includes Y, and controlling the mass percentage B of Y to fall within the range of this application can further improve the crystal structure stability of the positive electrode active material and increase the degree of interaction between different components in the electrolyte at low temperature, which optimizes the toughness of the protective film on the positive electrode interface, further improving the low-temperature performance of the secondary battery and reducing the impedance of the secondary battery.

In an embodiment of this application, M includes Y, a mass percentage of Y is B based on a mass of the positive electrode active material, and a mass percentage of the propionate is A based on a mass of the electrolyte, where 0.1%≤A≤70%, and 0.2≤A/B≤800. For example, A may be 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 8.7%, 9%, 9.3%, 9.7%, 10%, 15%, 20%, 25%, 30%, 35%, 40%, 45%, 50%, 55%, 60%, 65%, 70%, or within a range defined by any two of these values; and A/B may be 0.2, 1, 5, 10, 15, 25, 50, 96, 100, 104, 125, 146, 150, 154, 196, 200, 204, 246, 250, 254, 296, 300, 304, 346, 350, 354, 396, 400, 404, 446, 450, 454, 496, 500, 504, 546, 550, 554, 596, 600, 604, 646, 650, 654, 696, 700, 704, 746, 750, 754, 796, 800, or within a range defined by any two of these values. Controlling the mass percentage A of the propionate and the value of A/B to fall within the ranges of this application can match the mass percentage of the propionate with that of Y in the positive electrode active material, so that the propionate can synergize with the positive electrode active material, which can promote the migration of lithium ions and prevent side reactions, further improving the low-temperature performance of the secondary battery and reducing the impedance of the secondary battery.

In an embodiment of this application, M includes at least one of La, Mg, or W, and a mass percentage of La, Mg, or W is independently 200 ppm to 10000 ppm based on a mass of the positive electrode active material. For example, the mass percentage of La may be 200 ppm, 400 ppm, 600 ppm, 800 ppm, 1000 ppm, 1200 ppm, 2000 ppm, 2200 ppm, 3000 ppm, 3200 ppm, 4000 ppm, 4200 ppm, 5000 ppm, 5200 ppm, 6000 ppm, 6200 ppm, 7000 ppm, 7200 ppm, 8000 ppm, 8200 ppm, 9000 ppm, 9200 ppm, 10000 ppm, or within a range defined by any two of these values; the mass percentage of Mg may be 200 ppm, 400 ppm, 600 ppm, 800 ppm, 1000 ppm, 1200 ppm, 2000 ppm, 2200 ppm, 3000 ppm, 3200 ppm, 4000 ppm, 4200 ppm, 5000 ppm, 5200 ppm, 6000 ppm, 6200 ppm, 7000 ppm, 7200 ppm, 8000 ppm, 8200 ppm, 9000 ppm, 9200 ppm, 10000 ppm, or within a range defined by any two of these values; and the mass percentage of W may be 200 ppm, 400 ppm, 600 ppm, 800 ppm, 1000 ppm, 1200 ppm, 2000 ppm, 2200 ppm, 3000 ppm, 3200 ppm, 4000 ppm, 4200 ppm, 5000 ppm, 5200 ppm, 6000 ppm, 6200 ppm, 7000 ppm, 7200 ppm, 8000 ppm, 8200 ppm, 9000 ppm, 9200 ppm, 10000 ppm, or within a range defined by any two of these values. Controlling M to include at least one of La, Mg, or W and the mass percentage of the doping element La, Mg, or W to independently fall within the range of this application can increase the surface resistance of the positive electrode plate to some extent, so that lithium ions have an appropriate deintercalation rate, improving the structural stability and cycling performance of the secondary battery.

In an embodiment of this application, M includes at least one of Ba or Ca, and a mass percentage of Ba or Ca is independently 100 ppm to 22000 ppm based on a mass of the positive electrode active material. For example, the mass percentage of Ba may be 100 ppm, 500 ppm, 1000 ppm, 1200 ppm, 2500 ppm, 4700 ppm, 5000 ppm, 5300 ppm, 7200 ppm, 7500 ppm, 7800 ppm, 9000 ppm, 9700 ppm, 10000 ppm, 10300 ppm, 14700 ppm, 15000 ppm, 15300 ppm, 19700 ppm, 20000 ppm, 20300 ppm, 21700 ppm, 22000 ppm, or within a range defined by any two of these values; and the mass percentage of Ca may be 100 ppm, 500 ppm, 1000 ppm, 1200 ppm, 2500 ppm, 4700 ppm, 5000 ppm, 5300 ppm, 7200 ppm, 7500 ppm, 7800 ppm, 9000 ppm, 9700 ppm, 10000 ppm, 10300 ppm, 14700 ppm, 15000 ppm, 15300 ppm, 19700 ppm, 20000 ppm, 20300 ppm, 21700 ppm, 22000 ppm, or within a range defined by any two of these values. Controlling M to include at least one of Ba or Ca and the mass percentage of the doping element Ba or Ca to independently fall within the range of this application can improve the high-temperature stability of the positive electrode active material, and make the secondary battery have good high-temperature performance while improving the low-temperature performance of the secondary battery and reducing the impedance of the secondary battery.

In this application, the electrolyte includes a lithium salt. The lithium salt may include various lithium salts commonly used in the art, for example, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. A mass percentage E of the lithium salt is 0.1% to 90% based on the mass of the electrolyte.

In this application, the electrolyte further includes another non-aqueous solvent. The another non-aqueous solvent is not particularly limited in this application, provided that the objectives of this application can be achieved. For example, the another non-aqueous solvent may include but is not limited to at least one of a carbonate compound, another carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or ethyl methyl carbonate (EMC). The cyclic carbonate compound may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The another carboxylate compound may include but is not limited to at least one of methyl formate, methyl acetate, ethyl acetate, n-propyl acetate, tert-butyl acetate, methyl propionate, γ-butyrolactone, decanolide, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In an embodiment of this application, the electrolyte may include propionate, a first additive, another non-aqueous solvent, and a lithium salt. Mass percentages of the propionate, the first additive, and the lithium salt are as described above. The secondary battery including the foregoing electrolyte has good low-temperature performance and low impedance.

In an embodiment of this application, the electrolyte may include propionate, a first additive, a second additive, another non-aqueous solvent, and a lithium salt. Mass percentages of the propionate, the first additive, the second additive, and the lithium salt are as described above. The secondary battery including the foregoing electrolyte has good low-temperature performance and low impedance.

The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The preparation method of the positive electrode active material LiCo₁₋ₐMₐO₂ is not particularly limited in this application, provided that the objectives of this application can be achieved. For example, the preparation method of the positive electrode active material LiCo₁₋ₐMₐO₂ may include the following steps: based on the chemical formula of the required positive electrode active material, mixing the mixture of tricobalt tetraoxide and lithium carbonate with a compound containing element M according to the elemental stoichiometric ratio in the chemical formula, and sintering them at 800°C to 1100°C for 11 h to 13 h to obtain the positive electrode active material. The mixing manner is not particularly limited in this application, provided that the objectives of this application can be achieved. For example, the mixing manner may be ball milling. The compound containing element M is not particularly limited in this application, provided that the objectives of this application can be achieved. For example, the compound containing element M may be an oxide or salt containing element M. Specifically, the compound containing element M may include MgO, La₂O₃, Y₂O₃, WO₃, BaO, or CaO.

When M is Y, the preparation method of the positive electrode active material may include the following steps: mixing the mixture of tricobalt tetraoxide and lithium carbonate with a compound containing Y at a certain ratio, and sintering them at 800°C to 1100°C for 11 h to 13 h to obtain the positive electrode active material. The mixing manner is not particularly limited in this application, provided that the objectives of this application can be achieved. For example, the mixing manner may be ball milling. The compound containing Y may include Y₂O₃.

When M is La, Mg, or W, the preparation method of the positive electrode active material may include the following steps: mixing the mixture of tricobalt tetraoxide and lithium carbonate with a compound containing La, a compound containing Mg, or a compound containing W at a certain ratio, and sintering them at 800°C to 1100°C for 11 h to 13 h separately to obtain the corresponding positive electrode active material. The mixing manner is not particularly limited in this application, provided that the objectives of this application can be achieved. For example, the mixing manner may be ball milling. The compound containing La may include La₂O₃. The compound containing Mg may include MgO. The compound containing W may include WO₃.

When M is Ba or Ca, the preparation method of the positive electrode active material may include the following steps: mixing the mixture of tricobalt tetraoxide and lithium carbonate with a compound containing Ba or a compound containing Ca at a certain ratio, and sintering them at 800°C to 1100°C for 11 h to 13 h separately to obtain the corresponding positive electrode active material. The mixing manner is not particularly limited in this application, provided that the objectives of this application can be achieved. For example, the mixing manner may be ball milling. The compound containing Ba may include BaO. The compound containing Ca may include CaO.

Controlling the mass percentage of element M in the positive electrode active material is not particularly limited in this application, provided that the objectives of this application can be achieved. For example, the mass percentage of element M in the positive electrode active material can be controlled by controlling the mass percentage of the added compound containing element M.

The method of controlling the mass percentage B of Y is not particularly limited in this application, provided that the objectives of this application can be achieved. For example, the mass percentage B of Y can be controlled by controlling the mass percentage of the added compound containing Y.

The method of controlling A/B is not particularly limited in this application, provided that the objectives of this application can be achieved. For example, the value of A/B can be controlled by controlling the values of A and B, and the controlling method is as described above.

The positive electrode material layer of this application further includes a conductive agent and a binder. Type of the conductive agent is not particularly limited in this application, provided that the objectives of this application can be achieved. For example, the conductive agent may include but is not limited to at least one of conductive carbon black (Super P), carbon nanotubes (CNTs), carbon fiber, flake graphite, graphene, a metal material, or a conductive polymer. The conductive carbon black may include but is not limited to at least one of acetylene black or Ketjen black. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. The binder is not particularly limited in this application, provided that the objectives of this application can be achieved. For example, the binder may include but is not limited to at least one of polyacrylate, polyimide, polyamide, polyamideimide, polyvinylidene fluoride (PVDF), polystyrene butadiene copolymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. A mass ratio of the positive electrode active material, the conductive agent, and the binder in the positive electrode material layer is not particularly limited in this application, and persons skilled in the art can make selection based on actual needs, provided that the objectives of this application can be achieved.

Thickness of the positive electrode current collector is not particularly limited in this application, provided that the objectives of this application can be achieved. For example, the thickness of the positive electrode current collector is 5 µm to 20 µm. Thickness of the positive electrode material layer is not particularly limited in this application, provided that the objectives of this application can be achieved. For example, the thickness of the positive electrode material layer is 30 µm to 250 µm. Thickness of the positive electrode plate is not particularly limited in this application, provided that the objectives of this application can be achieved. For example, the thickness of the positive electrode plate is 50 µm to 500 µm.

Optionally, the positive electrode plate may further include a conductive layer, and the conductive layer is located between the positive electrode current collector and the positive electrode material layer. Composition of the conductive layer is not particularly limited in this application, and the conductive layer may be a conductive layer commonly used in the art. The conductive layer includes a conductive agent and a binder. The conductive agent and the binder in the conductive layer are not particularly limited in this application, and may be at least one of the foregoing conductive agents and binders. A mass ratio of the conductive agent and the binder in the conductive layer is not particularly limited in this application, and persons skilled in the art can make selection based on actual needs, provided that the objectives of this application can be achieved.

In this application, the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction, or on two surfaces of the negative electrode current collector in its thickness direction. It should be noted that the "surface" herein may be an entire region or a partial region of the negative electrode current collector. This is not particularly limited in this application, provided that the objectives of this application can be achieved. The negative electrode current collector is not particularly limited in this application, provided that the objectives of this application can be achieved. For example, the negative electrode current collector may include copper, stainless steel, aluminum, nickel, titanium, sintered carbon, aluminum-cadmium alloy, or copper or stainless steel surface-treated with one of carbon, nickel, titanium, or silver. Type of the negative electrode current collector may include at least one of film, sheet, foil, mesh, porous body, foam body, or non-woven fabric body.

The negative electrode material layer of this application includes a negative electrode active material. The negative electrode active material is not particularly limited in this application, provided that the objectives of this application can be achieved. For example, specific examples of the negative electrode active material may be the following materials: carbonaceous materials such as artificial graphite, natural graphite, graphitized carbon fiber, and amorphous carbon; metal compounds that can form an alloy with lithium such as silicon (Si), aluminum (Al), tin (Sn), lead (Pb), zinc (Zn), bismuth (Bi), indium (In), magnesium (Mg), gallium (Ga), cadmium (Cd), Si alloy, Sn alloy, or Al alloy; metal oxides that can be doped and undoped with lithium such as SiO_{β} (0<β<2), SnO₂, vanadium oxide, and lithium vanadium oxide; or composite materials containing metal compounds and carbonaceous materials such as Si-C composite materials or Sn-C composite materials, and any one thereof or a mixture of two or more thereof may be used. In addition, a thin lithium metal film may be used as the negative electrode active material. A mass percentage of the negative electrode active material in the negative electrode material layer is not particularly limited in this application, provided that the objectives of this application can be achieved. For example, the mass percentage of the negative electrode active material may be 80% to 99% based on a mass of the negative electrode material layer.

The negative electrode material layer of this application further includes a binder and a conductive agent. The binder is not particularly limited in this application, provided that the objectives of this application can be achieved. For example, the binder may be at least one of the foregoing binders. The conductive agent is not particularly limited in this application, provided that the objectives of this application can be achieved. For example, the conductive agent may be at least one of the foregoing conductive agents. A mass percentage of the binder in the negative electrode material layer is not particularly limited in this application, provided that the objectives of this application can be achieved. For example, the mass percentage of the binder may be 0.1% to 10% based on the mass of the negative electrode material layer. A mass percentage of the conductive agent in the negative electrode material layer is not particularly limited in this application, provided that the objectives of this application can be achieved. For example, the mass percentage of the conductive agent may be 0.9% to 10% based on the mass of the negative electrode material layer.

Thickness of the negative electrode current collector is not particularly limited in this application, provided that the objectives of this application can be achieved. For example, the thickness of the negative electrode current collector is 5 µm to 15 µm. Thickness of the negative electrode material layer is not particularly limited in this application, provided that the objectives of this application can be achieved. For example, the thickness of the negative electrode material layer is 30 µm to 250 µm. Thickness of the negative electrode plate is not particularly limited in this application, provided that the objectives of this application can be achieved. For example, the thickness of the negative electrode plate is 50 µm to 500 µm.

Optionally, the negative electrode plate may further include a conductive layer, and the conductive layer is located between the negative electrode current collector and the negative electrode material layer. Composition of the conductive layer is not particularly limited in this application, and the conductive layer may be a conductive layer commonly used in the art. The conductive layer includes a conductive agent and a binder. The conductive agent and the binder in the conductive layer are not particularly limited in this application, and may be at least one of the foregoing conductive agents and binders. A mass ratio of the conductive agent and the binder in the conductive layer is not particularly limited in this application, and persons skilled in the art can make selection based on actual needs, provided that the objectives of this application can be achieved.

In this application, the secondary battery further includes a separator. The separator is configured to separate the positive electrode plate from the negative electrode plate to prevent short circuit inside the secondary battery and to allow electrolyte ions to pass through freely without affecting electrochemical charging and discharging processes. The separator is not particularly limited in this application, provided that the objectives of this application can be achieved. For example, material of the separator may include but is not limited to at least one of polyethylene (PE) and polypropylene (PP)-based polyolefin (PO), polyester (for example, polyethylene terephthalate (PET) film), cellulose, polyimide (PI), polyamide (PA), spandex, or aramid. Type of the separator may include at least one of woven film, non-woven film, microporous film, composite film, laminated film, or spinning film.

In this application, the separator may include a substrate and a surface treatment layer. The substrate may be a non-woven fabric or composite film having a porous structure, and material of the substrate may include at least one of polyethylene, polypropylene, polyethylene terephthalate, or polyimide. Optionally, the substrate may be a polypropylene porous film, a polyethylene porous film, a polypropylene non-woven fabric, a polyethylene non-woven fabric, or a polypropylene-polyethylene-polypropylene porous composite film. Optionally, the surface treatment layer is provided on at least one surface of the substrate, and the surface treatment layer may be a polymer layer, an inorganic material layer, or a layer formed by mixing a polymer and an inorganic material. For example, the inorganic material layer includes inorganic particles and a binder. The inorganic particle is not particularly limited in this application, and for example, may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited in this application, and may be, for example, at least one of the foregoing binders. The polymer layer includes a polymer, and material of the polymer includes at least one of polyamide, polyacrylonitrile, acrylate polymer, polyacrylic acid, polyvinylpyrrolidone, polyvinyl ether, polyvinylidene fluoride, or poly(vinylidene fluoride-hexafluoropropylene).

The secondary battery of this application further includes a packaging bag for accommodating the positive electrode plate, the separator, the negative electrode plate, the electrolyte, and other components known in the art in the secondary battery. The other components are not limited in this application. The packaging bag is not particularly limited in this application and may be any packaging bag well known in the art, provided that the objectives of this application can be achieved.

In this application, the secondary battery may include but is not limited to a lithium metal secondary battery, a lithium-ion secondary battery (lithium-ion battery), a lithium polymer secondary battery, or a lithium-ion polymer secondary battery.

A preparation process of the secondary battery of this application is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, an electrolyte is injected into the packaging bag, and the packaging bag is sealed to obtain a secondary battery; or a positive electrode plate, a separator, and a negative electrode plate are stacked in sequence, four corners of the entire laminated structure are fixed with tapes to obtain an electrode assembly with a laminated structure, the electrode assembly is put into a packaging bag, an electrolyte is injected into the packaging bag, and the packaging bag is sealed to obtain a secondary battery. In addition, an overcurrent prevention element, a guide plate, and the like may also be placed into the packaging bag as needed, so as to prevent pressure increase, overcharge, and overdischarge inside the secondary battery. The packaging bag is a packaging bag known in the art, and is not limited in this application.

A second aspect of this application provides an electronic apparatus including the secondary battery according to any one of the foregoing embodiments. Therefore, the electronic apparatus provided in this application has good usage performance.

Type of the electronic apparatus is not particularly limited in this application and the electronic apparatus may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

The following describes the embodiments of this application more specifically by using examples and comparative examples. Various tests and evaluations are performed according to the following methods. In addition, unless otherwise specified, "part" and "%" are based on mass.

### Test methods and equipment:

### Test for mass percentage of M in positive electrode active material:

High-frequency inductively coupled plasma (ICP) emission mass spectrometry was used to test the mass percentage of element M in the positive electrode active material.

### Test for low-temperature discharge performance:

At 25°C, the lithium-ion battery was left standing for 30 min, charged to 4.55 V at a constant current of 0.5C, then charged to 0.05C at a constant voltage of 4.55 V, left standing for 5 min, then discharged to 3.0 V at 0.5C, and left standing for 5 min after the discharging. The discharge capacity of the lithium-ion battery at 25°C was recorded as C0. At 25°C, the lithium-ion battery was charged to 4.55 V at a constant current of 0.5C, then charged to 0.05C at a constant voltage of 4.55 V, left standing for 5 min, then left standing at -10°C for 4 h, discharged to 3.0 V at 0.5C, and left standing for 5 min after the discharging. The discharge capacity of the lithium-ion battery at - 10°C was recorded as C1. 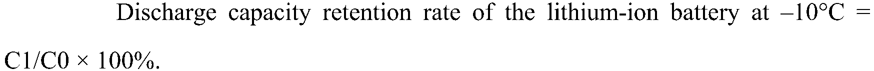 Discharge capacity retention rate of the lithium-ion battery at -10°C = C1/C0 × 100%.

### Test for discharge performance at high rate (1C):

At 25°C, the lithium-ion battery was charged to 4.3 V at 0.1C, then charged to a current of 0.05C at a constant voltage of 4.3 V, left standing for 5 min, and discharged to a voltage of 2.8 V at a constant current of 0.2C. The discharge capacity of the lithium-ion battery at this time was recorded as C2. The lithium-ion battery was charged to 4.3 V at 0.1C, then charged to a current of 0.05C at a constant voltage of 4.3 V, left standing for 5 min, and discharged to a voltage of 2.8 V at a constant current of 1C. The discharge capacity of the lithium-ion battery at this time was recorded as C3.$Discharge capacity retention rate at a high rate \left(1C\right) = C 3 / C 2 \times 100 % .$

### Test for direct current resistance (DCR):

At 25°C, the lithium-ion battery was charged to 4.48 V at a constant current of 0.7C, then charged to a current of 82.5 mA at a constant voltage of 4.48 V, and discharged at a constant current of 0.2C for 4 h, so that the state of charge (SOC) of the lithium-ion battery was 20%; then discharged at 0.1C for 10 s to obtain voltage V0; and discharged at 1C for 1 s to obtain voltage V1. DCR (initial state at 25°C) = (V0 - V1)/0.1C. The lithium-ion battery was charged to 4.48 V at a constant current of 0.7C, then charged to a current of 82.5 mA at a constant voltage of 4.48 V, discharged to 3.0 V at a constant current of 0.2C, subjected to the foregoing charge and discharge cycle 1000 times, charged to 4.48 V at a constant current of 0.7C after the cycles, then charged to a current of 82.5 mA at a constant voltage of 4.48 V, and discharged at a constant current of 0.2C for 4 h to 20% SOC; then discharged at 0.1C for 10 s to obtain voltage V2; and discharged at 1C for 1 s to obtain voltage V3. DCR (after 1000 cycles at 25°C) = (V2 - V3)/0.1C. 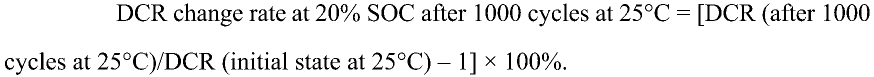 DCR change rate at 20% SOC after 1000 cycles at 25°C = [DCR (after 1000 cycles at 25°C)/DCR (initial state at 25°C) - 1] × 100%.

At 45°C, the lithium-ion battery was charged to 4.48 V at a constant current of 0.7C, then charged to a current of 82.5 mA at a constant voltage of 4.48 V, and discharged at a constant current of 0.2C for 4 h, so that the state of charge (SOC) of the lithium-ion battery was 20%; then discharged at 0.1C for 10 s to obtain voltage V4; and discharged at 1C for 1 s to obtain voltage V5. DCR (initial state at 45°C) = (V4 - V5)/0.1C. The lithium-ion battery was charged to 4.48 V at a constant current of 0.7C, then charged to a current of 82.5 mA at a constant voltage of 4.48 V, discharged to 3.0 V at a constant current of 0.2C, subjected to the foregoing charge and discharge cycle 700 times, charged to 4.48 V at a constant current of 0.7C after the cycles, then charged to a current of 82.5 mA at a constant voltage of 4.48 V, and discharged at a constant current of 0.2C for 4 h to 20% SOC; then discharged at 0.1C for 10 s to obtain voltage V6; and discharged at 1C for 1 s to obtain voltage V7. DCR (after 700 cycles at 45°C) = (V6 - V7)/0.1C. 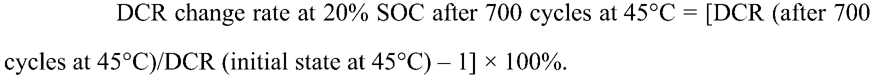 DCR change rate at 20% SOC after 700 cycles at 45°C = [DCR (after 700 cycles at 45°C)/DCR (initial state at 45°C) - 1] × 100%.

### Example 1-1

### <Preparation of positive electrode plate>

Mixture of tricobalt tetraoxide and lithium carbonate and Y₂O₃ were evenly mixed, and then sintered at 990°C for 12 h, followed by cooling, crushing, and sieving, to obtain a lithium cobalt oxide positive electrode active material doped with Y. Based on the mass of the positive electrode active material, the mass percentage B of Y was 1000 ppm. The foregoing positive electrode active material, conductive agent conductive carbon black, and binder polyvinylidene fluoride were added to a stirring tank at a mass ratio of 97.2:1.5:1.3, NMP solvent was added, and the mixture was stirred to uniformity using a vacuum stirrer and passed through a 200-mesh sieve to produce a positive electrode slurry, where a solid content of the positive electrode slurry was 75wt%. The positive electrode slurry was uniformly applied onto one surface of a 10 µm thick positive electrode current collector aluminum foil and dried at 120°C to obtain a positive electrode plate with an 80 µm thick positive electrode material layer on one surface. Then, the same steps were repeated on the other surface of the positive electrode current collector aluminum foil to obtain a positive electrode plate coated with positive electrode material layers on two surfaces. Then, after cold pressing, cutting, and slitting, a positive electrode plate was obtained.

### <Preparation of negative electrode plate>

Negative electrode active material artificial graphite, binder butadiene styrene rubber, and binder sodium carboxymethyl cellulose were mixed at a mass ratio of 95:2:3, deionized water was added, and the mixture was stirred to uniformity using a vacuum stirrer to produce a negative electrode slurry, where a solid content of the negative electrode slurry was 75wt%. The negative electrode slurry was uniformly applied onto one surface of a 5 µm thick negative electrode current collector copper foil and dried at 85°C for 4 h to obtain a negative electrode plate with a 130 µm thick negative electrode material layer on one surface. Then, the same steps were repeated on the other surface of the negative electrode current collector copper foil to obtain a negative electrode plate coated with negative electrode material layers on two surfaces. Then, after cold pressing, cutting, and slitting, a negative electrode plate was obtained.

### <Preparation of separator>

A 12 µm thick porous polypropylene film (provided by Celgard) was used.

### <Preparation of electrolyte>

In an argon atmosphere glove box with a water content of < 10 ppm, ethylene carbonate (EC), ethyl methyl carbonate (EMC), and diethyl carbonate (DEC) were mixed at a mass ratio of 3:5:2 to obtain a base mixture, then an appropriate amount of lithium salt LiPF₆, ethyl propionate, and first additive formula (Ia) were added to the base mixture, and the mixture was stirred to uniformity to obtain an electrolyte. Based on the mass of the electrolyte, the mass percentage E of the lithium salt was 12.5%, the mass percentage A of the ethyl propionate was 5%, and the mass percentage C of the first additive was 1.9%.

### < Preparation of lithium-ion battery>

The positive electrode plate, the separator, and the negative electrode plate were stacked sequentially so that the separator was located between the positive electrode plate and the negative electrode plate for separation. Then, the resulting stack was wound to obtain an electrode assembly. The electrode assembly was placed into an aluminum-plastic film, the electrolyte was injected, and the aluminum-plastic film was sealed, followed by processes such as standing, formation, and shaping, to obtain a lithium-ion battery.

### Examples 1-2 to 1-28

These examples were the same as Example 1-1 except that the related preparation parameters were adjusted according to Table 1. When the mass percentage of the added propionate or first additive changed, the content of the base mixture changed accordingly, and the mass ratio of EC, EMC, and DEC and the mass percentage of the lithium salt remained unchanged.

### Example 2-1

This example was the same as Example 1-22 except that the electrolyte was prepared according to the following method.

### <Preparation of electrolyte>

In an argon atmosphere glove box with a water content of < 10 ppm, ethylene carbonate (EC), ethyl methyl carbonate (EMC), and diethyl carbonate (DEC) were mixed at a mass ratio of 3:5:2 to obtain a base mixture, then lithium salt LiPF₆, propionate, first additive, and second additive lithium difluorophosphate were added to the base mixture, and the mixture was stirred to uniformity to obtain an electrolyte. The propionate included ethyl propionate and propyl propionate, and the first additive included formula (Ib2) and formula (Ic2). Based on the mass of the electrolyte, the mass percentage E of the lithium salt was 12.5%, the mass percentage of the ethyl propionate was 2.5%, the mass percentage of the propyl propionate was 2.5%, the mass percentage of the formula (Ib2) was 0.5%, the mass percentage of the formula (Ic2) was 0.7%, and the mass percentage D of the second additive was 2.3%.

### Examples 2-2 to 2-5

These examples were the same as Example 2-1 except that the related preparation parameters were adjusted according to Table 2. When the mass percentage of the added second additive changed, the content of the base mixture changed accordingly, and the mass ratio of EC, EMC, and DEC and the mass percentage of the lithium salt remained unchanged.

### Examples 3-1 to 3-3

These examples were the same as Example 2-2 except that the related preparation parameters were adjusted according to Table 3 and that the mass percentage of the added compound containing element M was adjusted in <Preparation of positive electrode plate> so that the mass percentage B of Y was as shown in Table 3. When the mass percentage of the added propionate changed, the content of the base mixture changed accordingly, and the mass ratio of EC, EMC, and DEC and the mass percentage of the lithium salt remained unchanged.

### Examples 3-4 and 3-5

These examples were the same as Example 2-2 except that the related preparation parameters were adjusted according to Table 3 and that the mass percentage of the added compound containing element M was adjusted in <Preparation of positive electrode plate> so that the mass percentage B of Y was as shown in Table 3. When the mass percentage of the added propionate changed, the content of the base mixture changed accordingly, and the mass ratio of EC, EMC, and DEC and the mass percentage of the lithium salt remained unchanged.

### Examples 3-6 to 3-12

These examples were the same as Example 2-2 except that the related preparation parameters were adjusted according to Table 3 and that the mass percentage of the added compound containing element M was adjusted in <Preparation of positive electrode plate> so that the mass percentage of element M was as shown in Table 3.

### Comparative Example 1

This comparative example was the same as Example 1-1 except that the electrolyte was prepared according to the following method.

### <Preparation of electrolyte>

In an argon atmosphere glove box with a water content of < 10 ppm, ethylene carbonate (EC), ethyl methyl carbonate (EMC), and diethyl carbonate (DEC) were mixed at a mass ratio of 3:5:2 to obtain a base mixture, then lithium salt LiPF₆ was added to the base mixture, and the mixture was stirred to uniformity to obtain an electrolyte. Based on the mass of the electrolyte, the mass percentage E of the lithium salt was 12.5%.

### Comparative Example 2

This comparative example was the same as Example 1-1 except that the electrolyte was prepared according to the following method.

### <Preparation of electrolyte>

In an argon atmosphere glove box with a water content of < 10 ppm, ethylene carbonate (EC), ethyl methyl carbonate (EMC), and diethyl carbonate (DEC) were mixed at a mass ratio of 3:5:2 to obtain a base mixture, then lithium salt LiPF₆ and ethyl propionate were added to the base mixture, and the mixture was stirred to uniformity to obtain an electrolyte. Based on the mass of the electrolyte, the mass percentage E of the lithium salt was 12.5%, and the mass percentage A of the ethyl propionate was 5%.

### Comparative Example 3

This comparative example was the same as Example 1-1 except that the electrolyte was prepared according to the following method.

### <Preparation of electrolyte>

In an argon atmosphere glove box with a water content of < 10 ppm, ethylene carbonate (EC), ethyl methyl carbonate (EMC), and diethyl carbonate (DEC) were mixed at a mass ratio of 3:5:2 to obtain a base mixture, then lithium salt LiPF₆ and first additive formula (Ia) were added to the base mixture, and the mixture was stirred to uniformity to obtain an electrolyte. Based on the mass of the electrolyte, the mass percentage E of the lithium salt was 12.5%, and the mass percentage C of the first additive was 2%.

Preparation parameters and electrical performance parameters of the examples and comparative examples are shown in Tables 1 to 3.

**Table 1**

| | Propionate | | First additive | | Discharge capacity retention rate at - 10°C (%) | Discharge capacity retention rate at a high rate (1C) (%) | DCR change rate at 20% SOC after 1000 cycles at 25°C (%) | DCR change rate at 20% SOC after 700 cycles at 45°C (%) |
|---|---|---|---|---|---|---|---|---|
| | Material | A (%) | Material | C (%) | | | | |
| Example 1-1 | Ethyl propionate | 10 | Formula (Ia) | 1.9 | 84.5 | 93.1 | 28.1 | 24.6 |
| Example 1-2 | Ethyl propionate | 0.01 | Formula (Ia) | 1.9 | 75.2 | 88.4 | 35.8 | 31.6 |
| Example 1-3 | Ethyl propionate | 5 | Formula (Ia) | 1.9 | 83.6 | 93.4 | 27.5 | 24.8 |
| Example 1-4 | Propyl propionate | 15 | Formula (Ia) | 1.9 | 84.6 | 93.3 | 27.9 | 24.4 |
| Example 1-5 | Ethyl propionate + propyl propionate | 2.5+2.5 | Formula (Ia) | 1.9 | 84.7 | 93.6 | 27.8 | 25.4 |
| Example 1-6 | Ethyl propionate | 5 | Formula (Ia) | 0.03 | 76.9 | 89.2 | 33.6 | 30.9 |
| Example 1-7 | Ethyl propionate | 5 | Formula (Ia) | 3.7 | 83.7 | 92.8 | 28.1 | 25.3 |
| Example 1-8 | Ethyl propionate | 5 | Formula (Ib1) | 0.7 | 80.1 | 90.5 | 32.9 | 28.7 |
| Example 1-9 | Ethyl propionate | 5 | Formula (Ib2) | 1.3 | 81.5 | 91.3 | 31.4 | 27.9 |
| Example 1-10 | Ethyl propionate | 5 | Formula (Ib3) | 2.2 | 83.8 | 92.9 | 28.0 | 25.2 |
| Example 1-11 | Ethyl propionate | 5 | Formula (Ic1) | 0.4 | 78.1 | 89.6 | 31.8 | 30.3 |
| Example 1-12 | Ethyl propionate | 5 | Formula (Ic2) | 0.7 | 80.3 | 90.2 | 32.7 | 28.4 |
| Example 1-13 | Ethyl propionate | 5 | Formula (Ic5) | 1.3 | 81.3 | 91.5 | 31.2 | 28.1 |
| Example 1-14 | Ethyl propionate | 5 | Formula (Ic6) | 2.4 | 84.1 | 93.2 | 27.3 | 25.9 |
| Example 1-15 | Ethyl propionate | 50 | Formula (Ic9) | 1.9 | 85.6 | 94.9 | 26.5 | 23.7 |
| Example 1-16 | Ethyl propionate | 40 | Formula (Ic10) | 3.4 | 85.4 | 94.3 | 26.8 | 23.9 |
| Example 1-17 | Ethyl propionate | 5 | Formula (Ia) + Formula (Ib1) | 1.9+0. 5 | 84.5 | 93.8 | 27.2 | 25.1 |
| Example 1-18 | Ethyl propionate | 5 | Formula (Ia) + Formula (Ic1) | 1.9+0. 5 | 84.9 | 93.3 | 27.6 | 25.3 |
| Example 1-19 | Ethyl propionate | 5 | Formula (Ib2) + Formula (Ic2) | 0.5+0. 7 | 81.6 | 91.4 | 31.5 | 27.6 |
| Example 1-20 | Ethyl propionate + propyl propionate | 2.5+2.5 | Formula (Ia) + Formula (Ib1) | 1.9+0. 5 | 84.8 | 93.0 | 27.3 | 25.2 |
| Example 1-21 | Ethyl propionate + propyl propionate | 2.5+2.5 | Formula (Ia) + Formula (Ic1) | 1.9+0. 5 | 84.7 | 93.9 | 27.4 | 25.5 |
| Example 1-22 | Ethyl propionate + propyl propionate | 2.5+2.5 | Formula (Ib2) + Formula (Ic2) | 0.5+0. 7 | 81.4 | 91.8 | 31.6 | 28.3 |
| Example 1-23 | Propyl propionate | 20 | Formula (Ic9) | 1.9 | 84.7 | 93.5 | 27.6 | 25.3 |
| Example 1-24 | Propyl propionate | 25 | Formula (Ic9) | 1.9 | 84.9 | 93.7 | 27.9 | 24.8 |
| Example 1-25 | Propyl propionate | 30 | Formula (Ic9) | 1.9 | 85.0 | 93.9 | 27.3 | 24.2 |
| Example 1-26 | Propyl propionate | 35 | Formula (Ic9) | 1.9 | 85.2 | 94.1 | 27.0 | 24.0 |
| Example 1-27 | Propyl propionate | 60 | Formula (Ic9) | 1.9 | 85.7 | 95.1 | 26.3 | 23.5 |
| Example 1-28 | Propyl propionate | 70 | Formula (Ic9) | 1.9 | 85.9 | 95.4 | 26.1 | 23.2 |
| Comparative Example 1 | / | / | / | / | 64.7 | 71.3 | 47.3 | 41.2 |
| Comparative Example 2 | Ethyl propionate | 5 | / | / | 66.4 | 74.8 | 45.6 | 37.3 |
| Comparative Example 3 | / | / | Formula (Ia) | 2 | 67.9 | 73.4 | 43.2 | 38.8 |

| | | | | | | | | |
|---|---|---|---|---|---|---|---|---|
| Note: (1) "/" in Table 1 means that a related preparation parameter does not exist; (2) In Table 1, for example, in Example 1-5, the propionate is "ethyl propionate + propyl propionate", and A (%) is "2.5%+2.5%", indicating that ethyl propionate with a mass percentage of 2.5% and propyl propionate with a mass percentage of 2.5% are added to the electrolyte. The same applies to other examples; (3) In Table 1, for example, in Example 1-17, the first additive is "Formula (Ia) + Formula (Ib1)", and C (%) is "1.9%+0.5%", indicating that formula (Ia) with a mass percentage of 1.9% and formula (Ib1) with a mass percentage of 0.5% are added to the electrolyte. The same applies to other examples. | | | | | | | | |

Referring to Table 1, it can be learned from Examples 1-1 to 1-28 and Comparative Examples 1 to 3 that with the electrolyte controlled to include the propionate and the first additive and the type of the first additive controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower. In Comparative Examples 1 to 3, the lithium-ion battery has lower discharge capacity retention rate at -10°C, lower discharge capacity retention rate at a high rate (1C), higher DCR change rate at 20% SOC after 1000 cycles at 25°C, and higher DCR change rate at 20% SOC after 700 cycles at 45°C, indicating that the low-temperature performance of the lithium-ion battery is worse and the impedance is higher.

The type of the propionate usually affects the low-temperature performance and impedance of the lithium-ion battery. It can be learned from Examples 1-1 to 1-5 and 1-20 to 1-28 that with the type of the propionate controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The type of the first additive usually affects the low-temperature performance and impedance of the lithium-ion battery. It can be learned from Examples 1-1 and 1-8 to 1-22 that with the type of the first additive controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The type of the compound represented by formula (Ib) usually affects the low-temperature performance and impedance of the lithium-ion battery. It can be learned from Examples 1-8 to 1-10 that with the type of the compound represented by formula (Ib) controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The type of the compound represented by formula (Ic) usually affects the low-temperature performance and impedance of the lithium-ion battery. It can be learned from Examples 1-11 to 1-16 that with the type of the compound represented by formula (Ic) controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The mass percentage A of the propionate usually affects the low-temperature performance and impedance of the lithium-ion battery. It can be learned from Examples 1-1 to 1-3 and 1-23 to 1-28 that with the mass percentage A of the propionate controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The mass percentage C of the first additive usually affects the low-temperature performance and impedance of the lithium-ion battery. It can be learned from Examples 1-1, 1-6, and 1-7 that with the mass percentage C of the first additive controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

**Table 2**

| | Second additive | | Discharge capacity retention rate at - 10°C (%) | Discharge capacity retention rate at a high rate (1C) (%) | DCR change rate at 20% SOC after 1000 cycles at 25°C (%) | DCR change rate at 20% SOC after 700 cycles at 45°C (%) |
|---|---|---|---|---|---|---|
| | Material | D (%) | | | | |
| Example 1-22 | / | / | 81.4 | 91.8 | 31.6 | 28.3 |
| Example 2-1 | Lithium difluorophosphate | 2.3 | 85.2 | 95.8 | 25.7 | 24.1 |
| Example 2-2 | Lithium fluorosulfonate | 1.7 | 84.8 | 95.3 | 26.2 | 24.5 |
| Example 2-3 | Bis(fluorosulfonyl)imide | 4.2 | 85.4 | 95.4 | 25.5 | 23.9 |
| Example 2-4 | Lithium difluorophosphate | 0.01 | 83.6 | 93.1 | 27.8 | 25.9 |
| Example 2-5 | Lithium difluorophosphate | 6 | 83.8 | 93.4 | 27.6 | 25.7 |

| | | | | | | |
|---|---|---|---|---|---|---|
| Note: "/" in Table 2 means that a related preparation parameter does not exist. | | | | | | |

The electrolyte further including the second additive and the type of the second additive usually affect the low-temperature performance and impedance of the lithium-ion battery. It can be learned from Examples 2-1 to 2-3 that with the electrolyte controlled to further include the second additive and the type of the second additive controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The mass percentage D of the second additive usually affects the low-temperature performance and impedance of the lithium-ion battery. It can be learned from Examples 2-1, 2-4, and 2-5 that with the mass percentage D of the second additive controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

**Table 3**

| | Compound containing element M | A (%) | B (ppm) | A/B | Mass percentage of La (ppm) | Mass percentage of Mg (ppm) | Mass percentage of W (ppm) | Mass percentage of Ba (ppm) | Mass percentage of Ca (ppm) | Discharge capacity retention rate at - 10°C (%) | Discharge capacity retention rate at a high rate (1C) (%) | DCR change rate at 20% SOC after 1000 cycles at 25°C (%) | DCR change rate at 20% SOC after 700 cycles at 45°C (%) |
|---|---|---|---|---|---|---|---|---|---|---|---|---|---|
| Example 2-2 | Y₂O₃ | 2.5+2.5 | 1000 | 50 | / | / | / | / | / | 84.8 | 95.3 | 26.2 | 24.5 |
| Example 3-1 | Y₂O₃ | 2.5+2.5 | 2000 | 25 | / | / | / | / | / | 85.2 | 95.5 | 25.9 | 24.2 |
| Example 3-2 | Y₂O₃ | 2.5+2.5 | 5000 | 10 | / | / | / | / | / | 85.5 | 95.2 | 25.6 | 23.6 |
| Example 3-3 | Y₂O₃ | 2.5+2.5 | 400 | 125 | / | / | / | / | / | 84.3 | 95.1 | 26.7 | 24.9 |
| Example 3-4 | Y₂O₃ | 8 | 400 | 200 | / | / | / | / | / | 84.5 | 94.9 | 26.5 | 24.6 |
| Example 3-5 | Y₂O₃ | 0.1 | 5000 | 0.2 | / | / | / | / | / | 84.7 | 94.8 | 26.3 | 24.5 |
| Example 3-6 | La₂O₃ | 2.5+2.5 | / | / | 200 | / | / | / | / | 83.7 | 94.8 | 27.3 | 24.9 |
| Example 3-7 | La₂O₃ | 2.5+2.5 | / | / | 10000 | / | / | / | / | 85.1 | 95.4 | 26.2 | 23.8 |
| Example 3-8 | MgO | 2.5+2.5 | / | / | / | 4000 | / | / | / | 84.2 | 95.1 | 26.8 | 24.4 |
| Example 3-9 | BaO | 2.5+2.5 | / | / | / | / | / | 100 | / | 83.5 | 94.6 | 27.5 | 25.2 |
| Example 3-10 | WO₃ | 2.5+2.5 | / | / | / | / | 7000 | / | / | 84.7 | 95.3 | 26.7 | 24.3 |
| Example 3-11 | BaO | 2.5+2.5 | / | / | / | / | / | 22000 | / | 84.5 | 95.2 | 26.9 | 24.6 |
| Example 3-12 | CaO | 2.5+2.5 | / | / | / | / | / | / | 9000 | 84.9 | 95.5 | 26.7 | 24.1 |

| | | | | | | | | | | | | | |
|---|---|---|---|---|---|---|---|---|---|---|---|---|---|
| Note: "/" in Table 3 means that a related preparation parameter does not exist. | | | | | | | | | | | | | |

The type of the positive electrode active material, M including Y, and the mass percentage B of Y usually affect the low-temperature performance and impedance of the lithium-ion battery. It can be learned from Examples 2-2 and 3-1 to 3-3 that with M controlled to include Y and the type of the positive electrode active material and the mass percentage B of Y controlled to fall within the ranges of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

The mass percentage A of the propionate and the value of A/B usually affect the low-temperature performance and impedance of the lithium-ion battery. It can be learned from Examples 3-4 and 3-5 that with the mass percentage A of the propionate and the value of A/B controlled to fall within the ranges of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better and the impedance of the lithium-ion battery is lower.

M including at least one of La, Mg, or W and the mass percentage of La, Mg, or W usually affect the structural stability and cycling performance of the lithium-ion battery. It can be learned from Examples 3-6 to 3-8 and 3-10 that with M controlled to include at least one of La, Mg, or W and the mass percentage of La, Mg, or W controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the cycling impedance of the lithium-ion battery is lower and the cycling performance of the lithium-ion battery is better.

M including at least one of Ba or Ca and the mass percentage of Ba or Ca usually affect the low-temperature performance, impedance, and high-temperature performance of the lithium-ion battery. It can be learned from Examples 3-9, 3-11, and 3-12 that with M controlled to include at least one of Ba or Ca and the mass percentage of Ba or Ca controlled to fall within the range of this application, the lithium-ion battery has higher discharge capacity retention rate at -10°C, higher discharge capacity retention rate at a high rate (1C), lower DCR change rate at 20% SOC after 1000 cycles at 25°C, and lower DCR change rate at 20% SOC after 700 cycles at 45°C, indicating that the low-temperature performance of the lithium-ion battery is better, the impedance of the lithium-ion battery is lower, and the high-temperature performance of the lithium-ion battery is better.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising a positive electrode plate, a negative electrode plate, and an electrolyte, wherein the electrolyte comprises propionate and a first additive, and the first additive comprises at least one of a compound represented by formula (Ia), a compound represented by formula (Ib), or a compound represented by formula (Ic), 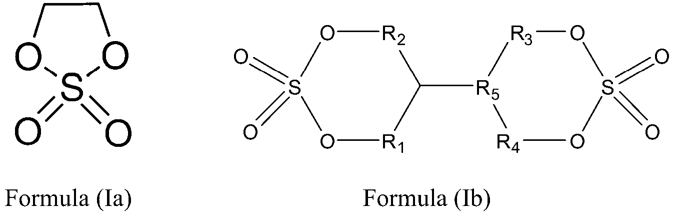 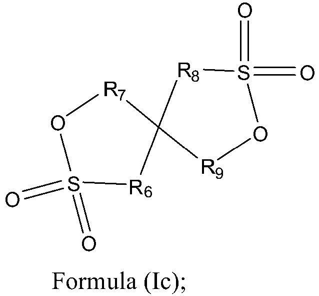 wherein R₁, R₂, R₃, and R₄ are each independently selected from single bond and methylene substituted by Ra or unsubstituted, Ra in each group being each independently selected from F, Cl, Br, I, methyl, ethyl, propyl, isopropyl, butyl, tert-butyl, trifluoromethyl, and tetrafluoroethyl, and not all of R₁, R₂, R₃, and R₄ being single bonds; R₅ is selected from single bond, -O-, C1 to C3 alkylene, C1 to C3 haloalkylene, or C1 to C3 oxyalkylene; and R₆, R₇, R₈, and R₉ are each independently selected from C1 to C5 alkylene substituted by Rb or unsubstituted and O, Rb in each group being each independently selected from F, Cl, Br, I, methyl, ethyl, propyl, isopropyl, butyl, tert-butyl, trifluoromethyl, and tetrafluoroethyl.

2. The secondary battery according to claim 1, wherein the electrolyte satisfies at least one of the following:
(1) the propionate comprises at least one of ethyl propionate or propyl propionate;
(2) the compound represented by formula (Ib) comprises at least one of the following compounds: 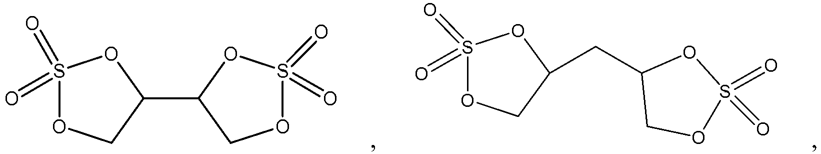 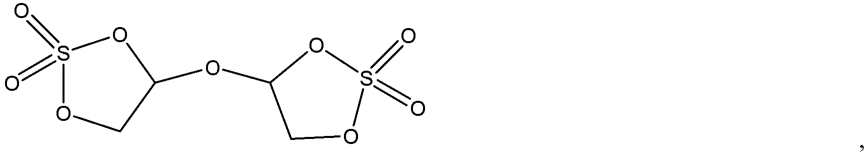 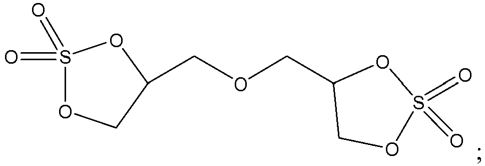
(3) the compound represented by formula (Ic) comprises at least one of the following compounds: 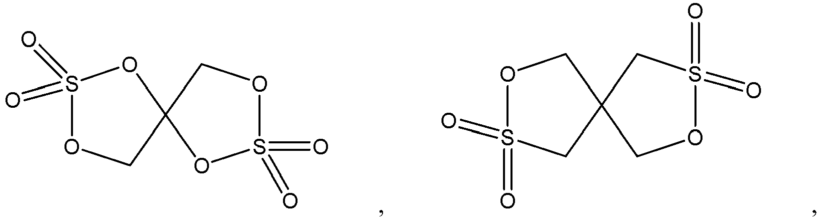 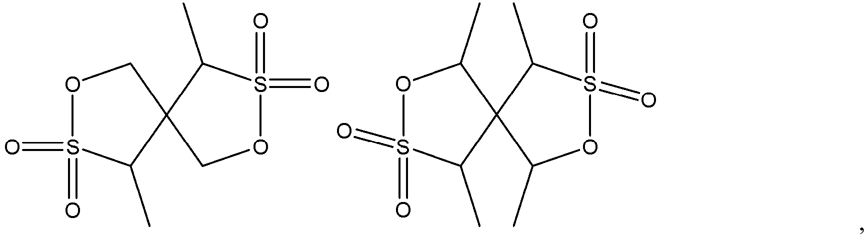 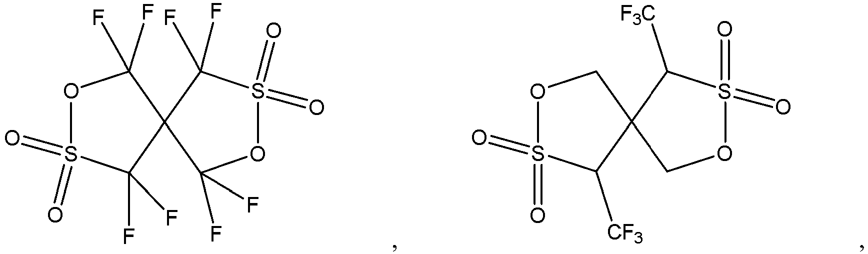 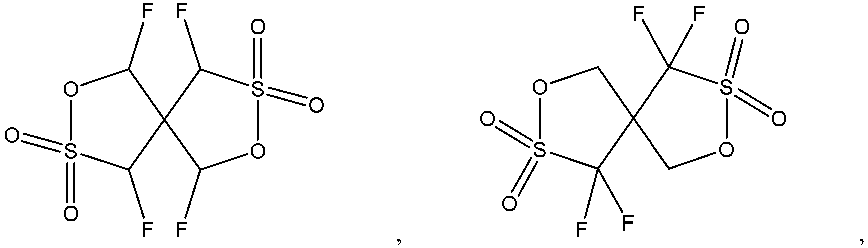 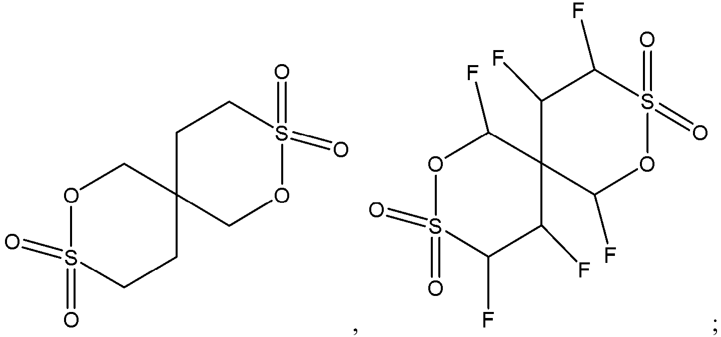
(4) a mass percentage of the propionate is A based on a mass of the electrolyte, wherein 0.01%≤A≤70%; and
(5) a mass percentage of the first additive is C based on the mass of the electrolyte, wherein 0.01%≤C≤4%.

3. The secondary battery according to claim 1, wherein the electrolyte further comprises a second additive, and the second additive comprises at least one of lithium difluorophosphate, lithium fluorosulfonate, or bis(fluorosulfonyl)imide.

4. The secondary battery according to claim 3, wherein a mass percentage of the second additive is D based on a mass of the electrolyte, wherein 0.01%≤D≤6%.

5. The secondary battery according to claim 1, wherein the positive electrode plate comprises a positive electrode current collector and a positive electrode material layer disposed on at least one surface of the positive electrode current collector, the positive electrode material layer comprises a positive electrode active material, and a chemical formula of the positive electrode active material is LiCo₁₋ₐMₐO₂, wherein M comprises at least one of Mg, Al, Ti, Zr, Ce, La, Y, W, Ba, or Ca, and 0≤a≤0.2.

6. The secondary battery according to claim 5, wherein M comprises Y, and a mass percentage of Y is B based on a mass of the positive electrode active material, wherein 400 ppm≤B≤5000 ppm.

7. The secondary battery according to claim 5, wherein M comprises Y, a mass percentage of Y is B based on a mass of the positive electrode active material, and a mass percentage of the propionate is A based on a mass of the electrolyte, wherein 0.1%≤A≤70%, and 0.2≤A/B≤800.

8. The secondary battery according to claim 5, wherein M comprises at least one of La, Mg, or W, and a mass percentage of La, Mg, or W is independently 200 ppm to 10000 ppm based on a mass of the positive electrode active material.

9. The secondary battery according to claim 5, wherein M comprises at least one of Ba or Ca, and a mass percentage of Ba or Ca is independently 100 ppm to 22000 ppm based on a mass of the positive electrode active material.

10. An electronic apparatus, comprising the secondary battery according to any one of claims 1 to 9.
